Europäisches Patentamt

European Patent Office

Office européen des brevets

(19)

(11) Veröffentlichungsnummer: **0 168 743**
**B1**

(12) **EUROPÄISCHE PATENTSCHRIFT**

(45) Veröffentlichungstag der Patentschrift:
28.06.89

(21) Anmeldenummer: 85108430.1

(22) Anmeldetag: 08.07.85

(51) Int. Cl.⁴: **H 02 K   5/08**

(54) Stator für Gleichstrom-Kleinstmotoren.

(30) Priorität: 16.07.84 DE 3426126

(43) Veröffentlichungstag der Anmeldung:
22.01.86 Patentblatt 86/04

(45) Bekanntmachung des Hinweises auf die Patenterteilung: 28.06.89 Patentblatt 89/26

(84) Benannte Vertragsstaaten:
AT DE FR GB NL

(56) Entgegenhaltungen:
AT–B–   243 363
US–A–  3 422 294

(73) Patentinhaber: Braun Aktiengesellschaft
Rüsselsheimer Strasse 22
D-6000 Frankfurt/Main (DE)

(72) Erfinder: Trebitz, Bernd, Dr.
Mayers Gärten 13
D-6240 Königstein (DE)
Erfinder: Tewes, Bernd
Am Wald 1
D-6200 Wiesbaden-Medenbach (DE)
Erfinder: Klawuhn, Manfred
Leerbachstrasse 62
D-6000 Frankfurt/Main (DE)

(74) Vertreter: Einsele, Rolf
Braun Aktiengesellschaft Postfach 1120 Frankfurter
Strasse 145
D-6242 Kronberg Taunus (DE)

EP 0 168 743 B1

## Beschreibung

Die Erfindung betrifft einen Stator für Gleichstrom-Kleinstmotoren mit einem rohrförmigen Rückschluß und mit einem ringförmigen oder ringsegmentförmigen Kunststoffmagneten.

In der DE-OS 19 54 796 ist ein Verfahren zur Herstellung eines an die Innenfläche des Rückschlusses angespritzten Dauermagneten beschrieben. Die Verbindung eines Lagerschilds mit dem Rückschluß eines Gleichstrommotors kann beispielsweise dadurch geschehen, daß am Rückschluß angebrachte Metall-Laschen umgebogen werden. (Siehe AT-B-243363).

Der Wirkungsgrad eines Gleichstrommotors ist unter anderem maßgeblich von der Größe des Luftspalts zwischen Rotor und dem ihn umgebenden Magneten abhängig, das heißt je kleiner dieser Luftspalt ist, desto größer ist der Wirkungsgrad des Motors. Zwischen dem Rotor und dem Magneten ergeben sich aus Fertigungsgründen aber meist verhältnismäßig große Toleranzen, so daß der Luftspalt relativ groß vorgesehen werden muß, wenn das Lagerschild und das Lager einfach und kostengünstig herzustellen sein soll.

Aufgabe der Erfindung ist es, einen Stator der eingangs genannten Art so auszubilden, daß er kostengünstig herstellbar ist und der Motor einfach zu montieren ist und einen hohen Wirkungsgrad aufweist.

Eine erste Lösung besteht darin, daß der Kunststoffmagnet in der Nähe von mindestens einer seiner Stirnseiten gleichmäßig am inneren Umfang verteilte Ausnehmungen aufweist, in welche Lagerschilde einklipsbar sind.

Eine zweite Lösung der Aufgabe besteht darin, daß der Rückschluß aus eisengefülltem Kunststoff im Verbund mit dem Kunststoffmagneten im Spritzgußverfahren hergestellt ist, daß der Rückschluß an mindestens einer Stirnseite über den Kunststoffmagneten hinausragt und daß er in der Nähe von mindestens einer seiner Stirnseiten gleichmäßig am inneren Umfang verteilte Ausnehmungen aufweist, in welche Lagerschilde einklipsbar sind.

Durch diese erfindungsgemäßen Maßnahmen ist es möglich, die Lager als Zylinderlager auszubilden, die bei der Herstellung einstückig mit dem Lagerschild bzw. dem Lagergehäuse gespritzt werden. Dabei wird gleichzeitig eine Verringerung des Luftspalts zwischen Rotor und Magnet und damit eine Erhöhung des Wirkungsgrads erreicht.

Ausgestaltungen der Erfindung sind in den Unteransprüchen beschrieben.

Die Erfindung wird im folgenden an Hand von in der Zeichnung dargestellten Ausführungsbeispielen näher erläutert:

Es zeigt

Fig. 1 die Gesamtansicht eines Motors im Schnitt, wobei beide Lagerschilde in einen Kunststoffmagneten eingeklipst sind,

Fig. 2 die Gesamtansicht eines Motors im Schnitt, wobei beide Lagerschilde in einen im Verbund mit dem Kunststoffmagneten gespritzten Rückschluß eingeklipst sind,

Fig. 3 einen Stator nach Figur 1,

Fig. 4 einen Stator nach Fig. 2.

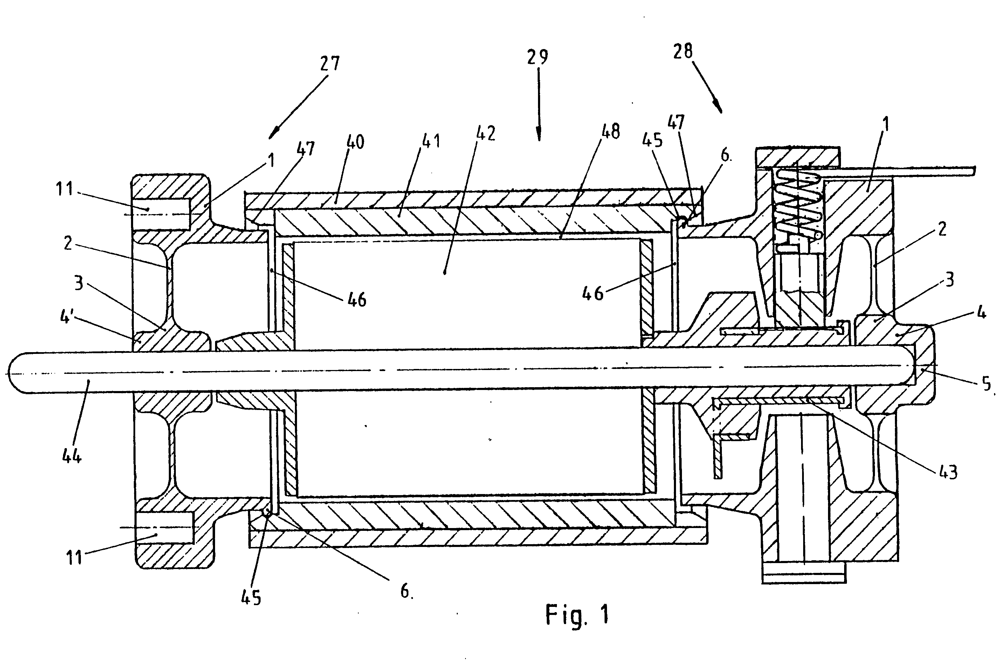

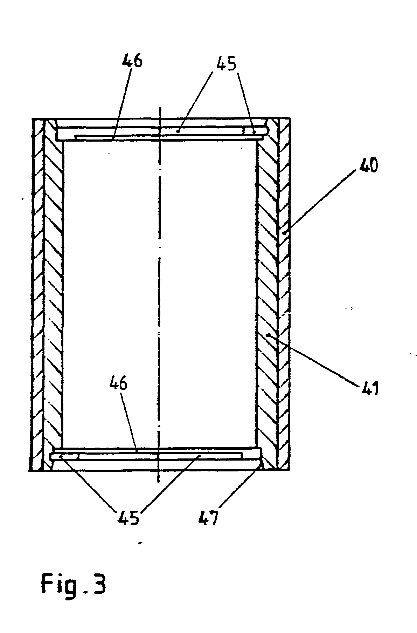

Der in Fig. 1 dargestellte Motor besteht im wesentlichen aus dem Stator 29 mit dem Rückschluß 40 und dem gespritzten Kunststoffmagneten 41, dem Rotor 42 mit dem Kollektor 43 und der Welle 44, sowie aus dem antriebsseitigen Lagerschild 27 und dem kommutatorseitigen Lagerschild 28. Hierbei sind beide Lagerschilde 27 und 28 mit jeweils drei Rastnasen 6 in entsprechende Ausnehmungen 45 (vgl. auch Fig. 3) des ringförmigen oder ringsegmentförmigen Kunststoffmagneten 41 geklipst.

Das kommutatorseitige Lagerschild 28 ist einschließlich des Zylinderlagers 4 und der Anlaufscheibe 5 einstückig gespritzt. Das Lager 4' des antriebsseitigen Lagerschilds 27 ist durchgehend, weist also keine Anlaufscheibe auf, ist aber ebenfalls einstückig gespritzt. Die Ausgleichsfolie 2 zwischen dem Grundkörper 1 und dem Lagergehäuse 3 der Lagerschilde 27 und 28 dient zum Ausgleich eines eventuell zwischen der Rotorwelle 44 und der Achse der Lager 4 oder 4' auftretenden Winkelversatzes. Die sacklochartigen Ausnehmungen 11 am antriebsseitigen Lagerschild 27 dienen zur Befestigung des Motors am Gerätechassis.

Fig. 3 zeigt den Stator eines Motors nach Fig. 1 allein. Die hier umlaufenden Ausgleichsnuten 46 sind zum Ausgleich der Toleranzen, die durch die Spritztechnik bedingt sind, vorgesehen. Die in der Nähe der beiden Stirnseiten vorhandenen drei Ausnehmungen 45 erstrecken sich hier über etwa 60°.

Der Rückschluß 40 kann in den in Fig. 1 und 3 gezeigten Ausführungsbeispielen aus Metall oder aus eisengefülltem Kunststoff bestehen und er kann für sich allein oder im Verbund mit dem Kunststoffmagneten 41 hergestellt sein. Die Schrägen 47 an den Stirnseiten des Kunststoffmagneten 41 dienen zur Erleichterung des Einschnappens der Rastmittel der Lagerschilde. Diese Schrägen 47 können umlaufend oder segmentartig ausgebildet sein.

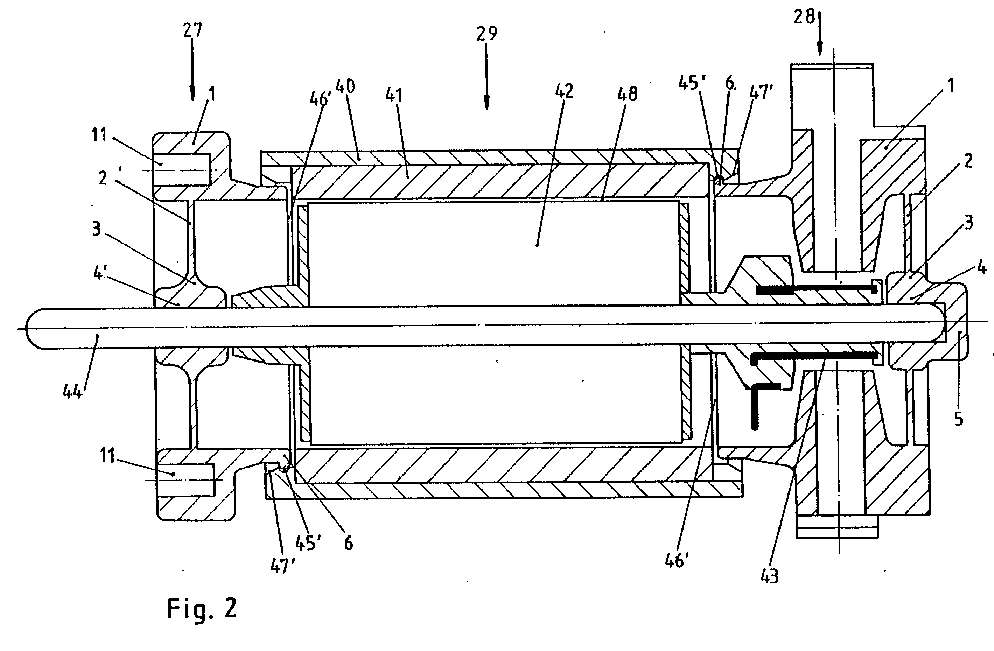

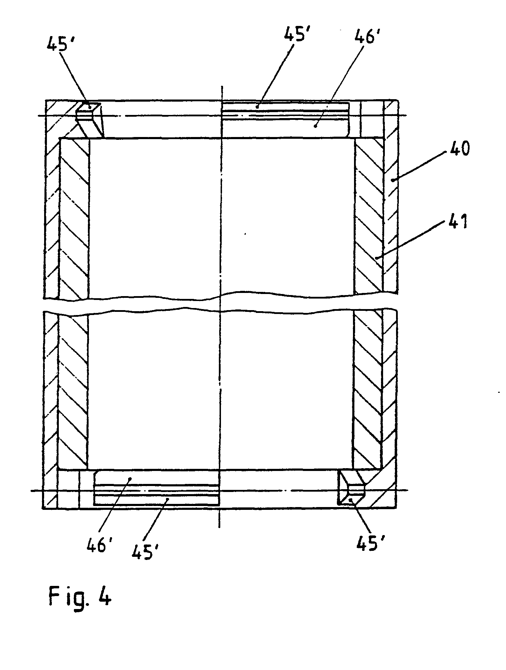

In Fig. 2 und 4 ist der Rückschluß 40 aus eisengefülltem Kunststoff und im Verbund mit dem Kunststoffmagneten 41 im Zwei-Stufen-Verfahren in einem Arbeitsgang gespritzt. Der Rückschluß 40 ragt hier an beiden Stirnseiten über den Kunststoffmagneten 41 soweit hinaus, daß an seiner Innenseite die Ausnehmungen 45' vorgesehen werden können. Die Ausgleichsnuten 46' sind in Fig. 4 segmentartig ausgebildet.

In allen gezeigten Ausführungsformen wird die Mittelachse des Kunststoffmagneten 41 mit der Mittelachse der Lager 4, 4' so genau fixiert, daß der Luftspalt 48 zwischen dem Rotor 42 und dem Kunststoffmagneten 40 sehr klein gehalten werden kann, so daß der Motor bei einfacher Montage und kostengünstiger Herstellung einen guten Wirkungsgrad aufweist.

Bezugszeichenliste

1 Grundkörper eines Lagerschilds
2 Ausgleichsfolie
3 Lagergehäuse
4 Lager (Zylinderlager) von 28
4' Lager (Zylinderlager) von 27
6 Rastnasen
11 Sacklochartige Ausnehmungen zur Befestigung
27 Antriebseitiges Lagerschild
28 Kommutatorseitiges Lagerschild
29 Stator
40 Rückschluß
41 Kunststoffmagnet
42 Rotor
43 Kollektor
44 Welle (Rotorwelle)
45 Ausnehmungen im Kunststoffmagnet 41
45' Ausnehmungen im Rückschluß 40
46 Ausgleichsnut im Magnet 41
46' Ausgleichsnut im Rückschluß 40
47 Schräge an der Stirnseite des Magneten 41
47' Schräge an der Stirnseite des Rückschlusses 40
48 Luftspalt zwischen Rotor 42 und Magnet 41

## Patentansprüche

1. Stator (29) für Gleichstrom-Kleinstmotoren mit einem rohrförmigen oder topfförmigen Rückschluß (40) und mit einem an der Innenseite des Rückschlusses (40) eingespritzten oder eingedrückten ringförmigen oder ringsegmentförmigen Kunststoffmagneten (41), dadurch gekennzeichnet, daß der Kunststoffmagnet (41) in der Nähe von mindestens einer seiner Stirnseiten gleichmäßig am inneren Umfang verteilte Ausnehmungen (45) aufweist, in welche Lagerschilder (27, 28) einklipsbar sind.

2. Stator (29) für Gleichstrom-Kleinstmotoren mit einem rohrförmigen oder topfförmigen Rückschluß (40) und mit einem an der Innenseite des Rückschlusses (40) eingespritzten ringförmigen oder ringsegmentförmigen Kunststoffmagneten (41), dadurch gekennzeichnet, daß der Rückschluß (40) aus eisengefülltem Kunststoff im Verbund mit dem Kunststoffmagneten (41) im Spritzgußverfahren hergestellt ist, daß der Rückschluß (40) an mindestens einer Stirnseite über den Kunststoffmagneten hinausragt und daß er in der Nähe von mindestens einer seiner Stirnseiten gleichmäßig am inneren Umfang verteilte Ausnehmungen (45') aufweist, in welche Lagerschilde (27, 28) einklipsbar sind.

3. Stator nach Anspruch 1 oder 2, dadurch gekennzeichnet, daß drei Ausnehmungen (45, 45') vorgesehen sind.

4. Stator nach Anspruch 3, dadurch gekennzeichnet, daß sich die Ausnehmungen (45, 45') über etwa 60° erstrecken.

5. Stator nach einem der Ansprüche 1, 2, 3 oder 4, dadurch gekennzeichnet, daß der Querschnitt der Ausnehmungen trapezförmig ist.

6. Stator nach Anspruch 1, dadurch gekennzeichnet, daß der Kunststoffmagnet (41) an seinen Stirnseiten umlaufende oder segmentierte Schrägen (47) zur Erleichterung des Einrastens der Lagerschilde aufweist.

7. Stator nach Anspruch 2, dadurch gekennzeichnet, daß der Rückschluß (40) an seinen Stirnseiten umlaufende oder segmentierte Schrägen (47') zur Erleichterung des Einrastens der Lagerschilde aufweist.

## Claims

1. Stator (29) for direct current micromotors having a tubular or cup-shaped yoke (40) and with an annular or ring-segmental plastic magnet (41) injection moulded or pressed onto the inside of the yoke (40), characterized in that the plastic magnet (41) has in the vicinity of at least one end face recesses (45) uniformly distributed over the inner circumference and into which can be fitted bearing brackets (27, 28).

2. Stator (29) for direct current micromotors having a tubular or cup-shaped yoke (40) and with an annular or ring-segmental plastic magnet (41) injection moulded on the inside of the yoke (40), characterized in that the yoke (40) is produced from iron-filled plastic in combination with the plastic magnet (41) in an injection moulding process, that the yoke (40) projects over the plastic magnet at least one end face and that in the vicinity of said at least one end face the yoke has recesses (45') uniformly distributed over the inner circumferences and into which can be fitted bearing brackets (27, 28).

3. Stator according to claim 1 or claim 2, characterized in that three recesses (45, 45') are provided.

4. Stator according to claim 3, characterized in that the recesses (45, 45') extend over approximately 60°.

5. Stator according to any one of claims 1, 2, 3 or 4, characterized in that the cross-section of the recesses is trapezoidal.

6. Stator according to claim 1, characterized in that at its end faces, the plastic magnet (41) has all-round or segmented bevels (47) to facilitate engagement of the bearing brackets.

7. Stator according to claim 2, characterized in that on its end faces, the yoke (40) has all-round or segmented bevels (47') to facilitate engagement of the bearing brackets.

## Revendications

1. Stator (29) pour petits moteurs à courant continu, comportant une terminaison de retour de flux (40) qui est en forme de tube ou de pot, et un aimant en matière synthétique (41), en forme d'anneau ou de segments d'anneau, qui est injecté sur le côté intérieur de la terminaison de retour de flux (40), ou qui y est monté à force, caractérisé par le fait qu'au voisinage d'au moins l'une de ses faces frontales, l'aimant en matière synthétique (41) présente des évidements (45) régulièrement répartis sur le pourtour intérieur, dans lesquels des flasques de palier (27, 28) peuvent être enclenchées.

2. Stator (29) pour petits moteurs à courant continu, comportant une terminaison de retour de flux (40) qui est en forme de tube ou de pot, et un aimant en matière synthétique (41), en forme d'anneau ou de segments d'anneau, qui est injecté sur le côté intérieur de la terminaison de retour de flux (40), ou qui y est monté à force, caractérisé par le fait que la terminaison de retour de flux (40) est réalisée par un procédé d'injection-moulage de matière plastique chargée de fer, en combinaison avec l'aimant en matière synthétique (41), par le fait que la terminaison de retour de flux (40) déborde, en au moins une face frontale, au-delà des aimants en matière synthétique, et par le fait qu'elle présente, au voisinage d'au moins l'une de ses faces frontales, des évidements (45') régulièrement répartis sur son pourtour intérieur, dans lesquels des flasques de palier (27, 28) peuvent être enclenchées.

3. Stator selon revendication 1 ou 2, caractérisé par le fait que trois évidements (45, 45') sont prévus.

4. Stator selon revendication 3, caractérisé par le fait que les évidements (45, 45') s'étendent sur environ (60°).

5. Stator selon l'une des revendications 1, 2, 3 ou 4, caractérisé par le fait que la section droite des évidements est trapézoïdale.

6. Stator selon revendication 1, caractérisé par le fait que l'aimant en matière synthétique (41) présente, sur ses côtés frontaux, des chanfreins (47) qui sont soit continus, soit segmentés, pour faciliter l'enclenchement des flasques de palier.

7. Stator selon revendication 2, caractérisé par le fait que, pour faciliter l'enclenchement des flasques de palier, la terminaison de retour de flux (40) présente, sur ses faces frontales, des chanfreins (47') continus ou segmentés.

Fig. 1

Fig. 2

EP 0 168 743 B1

Fig.3

Fig. 4